# EUROPEAN PATENT APPLICATION

(11) **EP 1 724 661 A1**
(43) Date of publication of application: **22.11.2006**
(21) Application number: 05010665.7
(22) Date of filing: 17.05.2005
(51) Int. Cl.: G06F 1/32

(54) **Method of adjusting CPU clock speed of an electronic appliance**

(71) Applicant: Chi Mei Communication Systems, Inc., Tai-Nan County Taiwan R.O.C. (TW)
(72) Inventor: Fu, Cheng-Long, Banciiao City Taipei Hsien Taiwan (TW); Wu, Kuo-Pin, Taipei Hsien Taiwan (TW); Ho, Min-Ching, Tucheng City Taipei Hsien (TW)
(74) Representative: Weber, Joachim

(57) **Abstract**

A method of adjusting clock speed of a central processing unit (CPU) of an electronic appliance including the following steps: (a) generating a first system loading of the CPU according to an active time of a first time period; and (b) determining the clock speed of the CPU according to the first system loading.

## Description

The present invention relates to a method of adjusting central processing unit (CPU) clock speed of an electronic appliance according to the pre-characterizing clause of claim 1.

Mobile phones are becoming common nowadays. The price of mobile phones continues dropping steadily. As a result, mobile phones are becoming affordable for more people. Additionally, as the level of technology and technical skills in the market increases, mobile phones possessing more functions and better features are found after a short period. In their efforts to satisfy the needs of their consumers and users, mobile phone manufacturers have been willing to apply new technology and technical skills to add more features and functions to new mobile phones. For example, smart phones or Microsoft Windows mobile devices are capable of executing a variety of application software such as: multi-media application programs, open platform applications, or other types of application programs. However, as the functions of the mobile phone increase, the operation of a processor must be upgraded as well to accommodate the increased complexity of a system loading. The upgraded processor requires greater power; hence, power consumption will increase as well. Now, a rechargeable battery is utilized to provide the operational voltage required by the mobile phone. Of course, the rechargeable battery has its limitation; a greater capacity rechargeable battery is being utilized to increase operation time of the mobile phone. One problem created by utilizing the greater capacity rechargeable battery is that of weight. Greater capacity rechargeable batteries provide more capacity but also, unfortunately, provide more weight. This additional weight is not convenient to be carried around, therefore an important issue is how to lower the power consumption, without affecting the original operating time, in which the mobile phone is capable of utilizing a smaller power capacity with a smaller body and a lighter weight rechargeable battery to provide more convenience for the user.

As known to those skilled in the art, a conventional method of power management is achieved by adjusting the clock speed of the CPU or the voltage to realize an adjustment in the overall electric consumption. In other words, when a system loading is not great then the usage status of the processor is also not in a full load therefore the power management mechanism will lower the speed or the voltage of the processor to achieve power savings. Alternatively, when the system loading becomes greater, in consideration to the overall system efficiency, the power management mechanism will adjust the processor to a full speed or a higher operation voltage. The boost in processor speed or operational voltage will avoid situations where the application program is processed excessively slow and may even avoid system crashes from occurring. In the conventional method, the detecting of system loading and utilization rate of the processor can be accomplished by monitoring the temperature of the processor. When the temperature of the processor is too high, it is known that the utilization rate of the processor and the system loading is high. Measuring the electric consumption of the processor is another conventional method for detecting system loading. When the electric consumption of the processor is high, it is known that the utilization rate of the processor and the system loading are at the status of full load. When the electric consumption of the processor is low, it is known that the utilization rate of the processor and the system loading may be at a low utilization rate or at an idle state.

However, in the conventional method of detecting system loading and the utilization rate of the processor, additional hardware components are required to measure the related parameter of the processor. For example, adding a temperature sensor to measure the temperature or adding an electric current circuit to measure the electric consumption, and so on. As a result, the cost is increased and configuration space is taken up, as it is needed by these additional components. Therefore, an important topic here is how to reduce power consumption of the mobile phone without increasing the cost and volume of the mobile phone.

This in mind, the present invention aims at providing a method of actively adjusting the CPU clock speed at different system loading of the electronic appliance to achieve an effective power management.

This is achieved by a method of adjusting central processing unit (CPU) clock speed of an electronic appliance according to claim 1. The dependent claims pertain to corresponding further developments and improvements.

As will be seen more clearly from the detailed description following below, the claimed method does not require any additional hardware component to measure the related parameter of the CPU. Furthermore, there is no requirement to read signals of the CPU to detect operating conditions of the CPU. As a result, there is no cost increase and no additional configuration space required. The present invention provides a method of effectively reducing power consumption of the mobile phone.

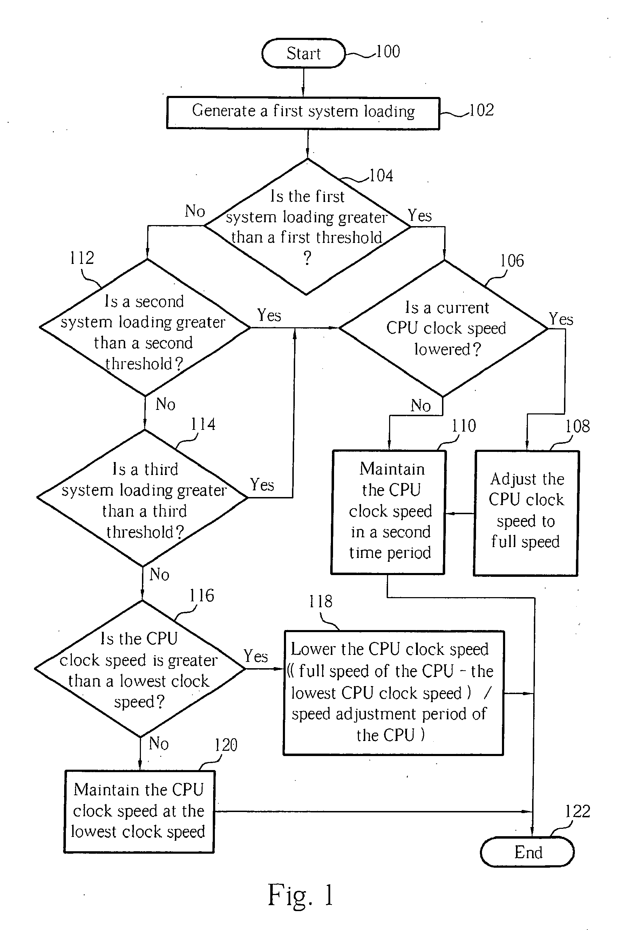

In the following, the invention is further illustrated by way of example, taking reference to the accompanying drawings. Thereof:
Fig. 1 illustrates a flowchart of adjusting a CPU clock speed of an electronic appliance according to the present invention.
Fig. 2 illustrates a diagram of a CPU of an electronic appliance at an operational state.
Fig. 3 illustrates a time-relation diagram of the invention flow during three phases.
Please refer Fig. 1. Fig. 1 illustrates a flowchart of adjusting CPU clock speed of an electronic appliance according to the present invention. The electronic appliance can be a portable device, for example a mobile phone that utilizes a Microsoft Windows CE operating system, the method comprising the following steps:
   Step 100: Start;
   Step 102: Generate a first system loading of the CPU according to an active time of a first time period;
   Step 104: Determine whether the first system loading of the first time period is greater than a first threshold, if greater than the first threshold, execute step 106; if less than the first threshold, then execute step 112;
   Step 106: Determine whether a current CPU clock speed has been lowered, if yes, execute step 108; If not, execute step 110;
   Step 108: Adjust the CPU clock speed to full speed, and execute step 110;
   Step 110: Maintain the CPU clock speed in a second time period;
   Step 112: Determine whether a second system loading of a third time period is greater than a second threshold, if greater than the second threshold, execute step 106; If less than the second threshold, then execute step 114;
   Step 114: Determine whether a third system loading of a fifth time period is greater than a third threshold, if greater than the third threshold, execute step 106; if less than the third threshold, then execute step 116;
   Step 116: Determine whether the CPU clock speed is greater than a lowest clock speed, if yes, execute step 118; If not, then execute step 120;
   Step 118: Lower the CPU clock speed ( ( full speed of the CPU - the lowest CPU clock speed ) / speed adjustment period of the CPU ) ;
   Step 120: Maintain the CPU clock speed at the lowest clock speed.
   Step 122: End.

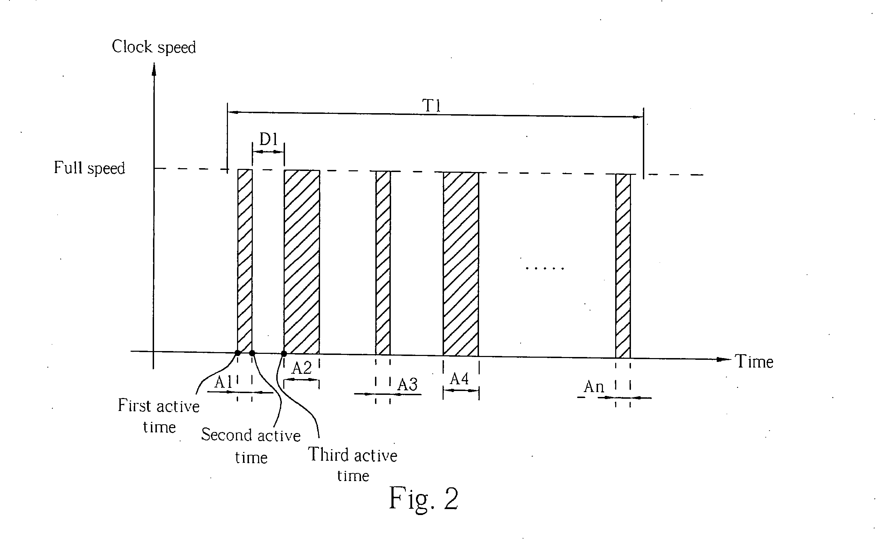

To further explain the method in the above-mentioned, looking at an aspect in a calculation of the system loading of the CPU, the active time of CPU at a time period is divided by the time period. For example, please refer Fig. 2. Fig. 2 illustrates a diagram of a CPU of an electronic appliance at an operational state. If an operating system is executing a schedule, the CPU is at an active phase, and when the system loading is great, the CPU clock speed can be at a full speed; when the operating system is not executing any schedule, the CPU can enter into an idle phase and the CPU clock speed is adjusted to zero. And in a time period T1, the active time of the CPU is operation clock of the CPU at full speed in the time sector, therefore the active time of the CPU in the time period T1 is added as A=A1 + A2 + A3 + A4 + ... + An, also the system loading S (%) = A / T1 ( % ) in the time period T1.

For each active time period and each idle time period the calculation is calculated respectively by count information provided by the operating system. For example, the calculation of an active time A1 can be done by reading a system counter after booting at a first time count value from an idle status to an active status and a second time count value from a current active status to an idle status. The active time A1 can be obtained by subtracting the second time value from the first time value. Calculation of an idle time D1 can be done by reading the second time count value and a third time count value from an idle status to a next active status, and the idle time D1 can be obtained by subtracting the third time count value with the second time count value. Therefore each active time and each idle time can be obtained by the above calculation methods, also the system loading of various time sector can also be obtained, in other words, the first system loading is the active time of the first time period divided by the first time period, the second system loading is the active time of the third time period divided by the third time period, and the third system loading is the active time of the fifth time period divided by the fifth time period.

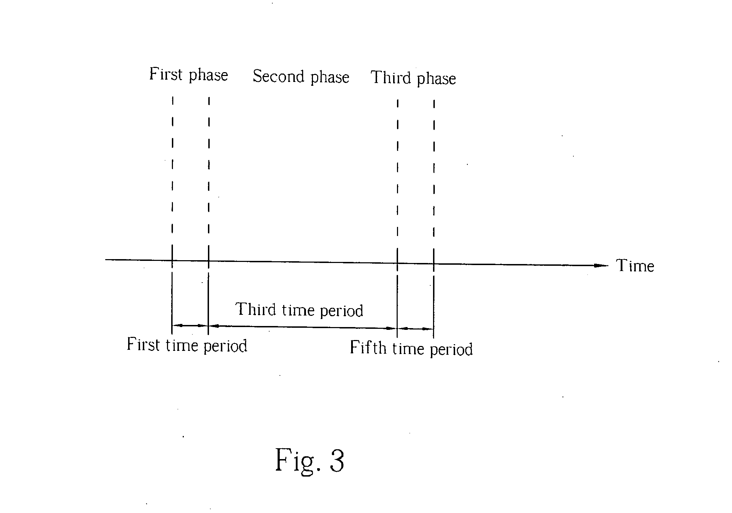

Please refer to Fig. 3. Fig. 3 illustrates a time-relation diagram of the invention flow during three phases. The first phase performs an estimation of the system loading. The first phase will estimate whether the system loading will become greater. The estimation time period is extremely short which may consist of approximately one to three seconds. When the first system loading is greater than the first threshold, then the estimated system loading becomes greater. Note that the first threshold can assign its own setting according to the demand of a design, for example, the first threshold can be set to 50%. As the estimated system loading is going to become greater, therefore the CPU clock speed must be adjusted to cope with a full speed of the system loading. When the current CPU clock speed is already lowered, the CPU clock speed must adjust back to the full speed, then step 110 will be executed afterwards; in step 110, when the current CPU clock speed has not been lowered or the CPU clock speed has already been adjusted back to the full speed, then the CPU clock speed can be maintained in the second time period, which means that after the second time period, the estimation of the system loading of the first phase can be carried out again to estimate whether the system loading has any great movement. The second time period in comparison is longer than the first time period. The second time period may require approximately 25 seconds to 35 seconds. If the first system loading in the first phase is not greater than the first threshold, then the system loading is estimated to maintain and not change, therefore the system loading can enter into the second phase.

The second phase is utilized for monitoring the system loading. The second phase can determine whether the system is in an overloading state or a stable condition. This is necessary to avoid the load of the system being small or idling at the stable condition in the first phase, but soon after the schedule will be executed and the system will enter into a state of a greater load, hence causing a misjudgment in the system loading state. Estimation time of the third time period in the second phase is longer and requires approximately 20 to 30 seconds. When the second system loading is greater than the second threshold, even though utilization rate of the CPU is not fully utilized, it can be determined that the system is at the overloading state. The second threshold can set its own setting according to the demand of the design, for example, the second threshold can be set to the first threshold * ( 1 + ( the full speed of the CPU - a current CPU clock speed ) / ( the full speed of the CPU - the lowest clock speed of the CPU ) ) . In other words, the first threshold increases the percentage of a gap between the full speed and the lowest clock speed of the CPU occupied by a gap between the full speed and the current CPU clock speed, to become the second threshold. As the system is determined to be at the overloading state, therefore it is not suitable to reduce the CPU clock speed, thus the CPU clock speed must be adjusted to cope with the full speed of the system loading. Under the same principle, when the CPU present clock speed is already lowered, then the CPU clock speed needs to be adjusted back to the full speed, then step 110 will be executed afterwards; in step 110, if when the current CPU clock speed has not been lowered or the CPU clock speed has already been adjusted back to the full speed, then the CPU clock speed can be maintained in the second time period, which means that after the second time period, the estimation of the system loading of the first phase can be carried out again to estimate whether the system loading has any great movement, however this waiting time period can also be another fourth time period. The fourth time period can be greater than the third time period, yet the fourth time period is not equal to the second time period. Like the previous time periods, again the fourth time period can set its own setting according to the demand of the design. If the second system loading is not greater than the second threshold in the second phase, then the system loading is estimated to maintain and not change, therefore the system loading can enter the third phase.

The third phase can estimate whether the system loading changes, similar to the first phase, estimate time of the fifth time period in the third phase is extremely short, it requires approximately 1 to 3 seconds. When the third system loading is greater than the third threshold, then the estimated system loading becomes greater. The third threshold can set its own setting according to the demand of the design, for example, the third threshold can be set to the same value as the first threshold, such as 50%, as the estimated system loading is going to become greater, therefore the CPU clock speed needs to be adjusted to cope with the full speed of the system loading, when the current CPU clock speed is already lowered, the CPU clock speed needs to adjust back the full speed, then step 110 will be executed afterwards; in step 110, when the current CPU clock speed has not been lowered or the CPU clock speed has already been adjusted back to the full speed, then the CPU clock speed can be maintained in the second time period, which means that after the second time period, the estimation of the system loading of the first phase can be carried out again to estimate whether the system loading has any great movement, however this waiting time period can also be another sixth time period. The sixth time period can be greater than the third time period, yet the sixth time period is not equal to the second time period, and again the sixth time period can set its own setting according to the demand of the design. If the third system loading is not greater than the third threshold in the third phase, then the system loading is estimated to maintain and not change, therefore the clock speed of the CPU can be lowered. At this time the CPU clock speed is determined whether it is greater than the lowest clock speed, if the CPU clock speed is equal to the lowest clock speed, then the CPU clock speed will be maintained at the lowest clock speed to reduce power consumption of the CPU. Many intervals of CPU clock speed can be utilized by realizing the following equation: ( ( the full speed of the CPU - the lowest clock speed of the CPU ) / speed adjustment gap of the CPU ) . In other words, the CPU clock speed can be divided into m number of levels from the full speed to the lowest clock speed, and after the above-mentioned process, when each system loading conforming to three phases is smaller than an individual threshold, then the CPU clock speed can be lowered to a lower level. When the above-mentioned process is repeated, each system loading conforming to the three phases is smaller than an individual threshold, and then the CPU clock speed is lowered again to another lower level.

After the above flow has executed, the flow returns to step 100 again. In estimating and determining the system loading state, the CPU clock speed adjusts accordingly to achieve a stable system operation and balanced power consumption.

The above flow is not only limited to the three phases of estimating and determining system loading sequence. The flow can also be divided into more phases or less phases of estimating and determining program sequence depending on the demand of the design, so long as it is based on the system loading to act as the method of actively adjusting the CPU clock speed which falls within the claim of the invention.

In comparison to the conventional method of detecting system loading and the utilization rate of the processor, the method of the present invention is capable of utilizing a software to detect the present system loading. The present invention also utilizes the result after the calculation to actively adjust the CPU clock speed based on different system loading to achieve a method of effective power management. The present invention does not require any additional hardware component to measure the related parameter of the CPU. Furthermore, there is no requirement to read signals of the CPU to detect operating conditions of the CPU. As a result, there is no cost increase and no additional configuration space required. The present invention provides a method of effectively reducing power consumption of the mobile phone.

## Claims

1. A method of adjusting clock speed of a central processing unit (CPU) of an electronic appliance, **characterized in that** the method comprises following steps:
(a) generating a first system loading of the CPU according to an active time of a first time period; and
(b) determining a clock speed of the CPU according to the first system loading.

2. The method of claim 1 **characterized in that** step (a) comprises dividing the active time of the first time period by the first time period to generate the first system loading.

3. The method of claim 1 **characterized in that** step (b) further comprises:
(c) determining whether the first system loading is greater than a first threshold; and
(d) determining the clock speed of the CPU according to a result of step (c).

4. The method of claim 3 **characterized in that** step (d) further comprises:
(e) maintaining the clock speed of the CPU in a second time period when the first system loading is greater than the first threshold and when a current clock speed of the CPU has not been lowered.

5. The method of claim 4 **characterized in that** the second time period is greater than the first time period.

6. The method of claim 3 **characterized in that** step (d) further comprises:
(f) adjusting the clock speed of the CPU to a full speed when the first system loading is greater than the first threshold and when a current clock speed has been lowered; and
(g) maintaining the clock speed of the CPU in a second time period after executing step (f).

7. The method of claim 6 **characterized in that** the second time period is greater than the first time period.

8. The method of claim 3 **characterized in that** step (d) further comprises:
(h) determining whether a second system loading of a third time period is greater than a second threshold; and
(i) determining the clock speed of the CPU according to a result of step (h).

9. The method of claim 8 **characterized in that** the third time period is greater than a first time period.

10. The method of claim 8 **characterized in that** the second threshold is equal to the first threshold * ( 1 + ( the full speed of the CPU - a current clock speed of the CPU ) / ( the full speed of the CPU - a lowest speed of the CPU ) )

11. The method of claim 8 **characterized in that** step (i) further comprises:
(j) maintaining the clock speed of the CPU in a fourth time period when the second system loading is greater than the second threshold and when a current clock speed of the CPU has not been lowered.

12. The method of claim 11 **characterized in that** the fourth time period is greater than the third time period.

13. The method of claim 8 **characterized in that** step (i) further comprises:
(k) adjusting the clock speed of the CPU to a full speed when the second system loading is greater than the second threshold and when a current clock speed of the CPU has been lowered; and
(l) maintaining the clock speed of the CPU in a fourth time period after executing step (k).

14. The method of claim 13 **characterized in that** the fourth time period is greater than the third time period.

15. The method of claim 8 **characterized in that** step (i) further comprises:
(m) determining whether a third system loading of a fifth time period is greater than a third threshold when the second system loading is less than the second threshold; and
(n) determining the clock speed of the CPU according to a result of step (m).

16. The method of claim 15 **characterized in that** the third threshold is equal to the first threshold.

17. The method of claim 15 **characterized in that** step (n) further comprises:
(o) controlling the clock speed of the CPU to a full speed; and
(p) maintaining the clock speed of the CPU in a sixth time period after executing step (o).

18. The method of claim 15 **characterized in that** step (n) further comprises:
(q) lowering the clock speed of the CPU to ( ( the full speed of the CPU - a lowest clock speed of the CPU ) / ( speed adjustment period of the CPU ) ) when the third system loading is less than the third threshold and when the clock speed of the CPU is greater than the lowest clock speed.

19. The method of claim 15 **characterized in that** step (n) further comprises:
(r) maintaining the clock speed of the CPU when the third system loading is less than the third threshold and when the clock speed of the CPU is equal to a lowest clock speed.

20. The method of claim 1 **characterized in that** the electronic appliance is a mobile phone.
